# EUROPEAN PATENT SPECIFICATION

(11) **EP 4 548 824 B1**
(45) Date of publication and mention of the grant of the patent: **05.08.2026**
(21) Application number: 23218782.3
(22) Date of filing: 20.12.2023
(51) Int. Cl.: A47J 42/06, A47J 42/38, A47J 42/04

(54) **DEVICE FOR GRINDING COFFEE BEANS**
VORRICHTUNG ZUM MAHLEN VON KAFFEEBOHNEN
DISPOSITIF DE MOUTURE DE GRAINS DE CAFÉ

(30) Priority: 02.11.2023 TW 112211897 U
(43) Date of publication of application: 07.05.2025
(73) Proprietor: Chuang-Kang Machinery Technology Co., Ltd., New Taipei City 236 (TW)
(72) Inventor: YEH, HSIANG-CHEN, 236 New Taipei City (TW)
(74) Representative: Lang, Christian

(56) References cited:
- EP-A1- 3 689 204
- US-A1- 2020 221 904
- US-A1- 2022 279 973

## Description

### BACKGROUND OF THE INVENTION

### Field of the Invention

The present invention relates to a technical field for grinding coffee beans, particularly to a device for grinding coffee beans.

### Description of the Related Art

There are two problems with conventional coffee bean grinding devices. The first problem is that the interior of the grinding device, especially the portion responsible for grinding the coffee beans, tends to retain the residual ground coffee powder. This residual coffee powder can not only mix with different types of coffee beans ground subsequently to cause mixed flavor but may also accumulate over time to lead to aflatoxins. If aflatoxins are mixed into freshly ground coffee, the brewed coffee may contain trace amounts of toxins, causing health risks to users that drink the brewed coffee. The second problem is that the grinding device installed on the grinding base lacks stability. During the grinding process, the frequent vibrations may wear or displace fasteners, thereby detaching the grinding device from the grinding base. Both of these problems are disadvantageous to the cleaning and maintenance of the coffee bean grinding device after daily use, as well as the long-term durability of the product.

US 2022/279973 A1 discloses a device for grinding coffee beans comprising a housing assembly having a housing, a supporting member, and an outer grinding member, wherein the supporting member and the outer grinding member are arranged in the housing; a shaft assembly having a shaft and an inner grinding member arranged on the shaft, the shaft penetrates through the supporting member, there is a grinding gap between the inner grinding member and the outer grinding member, rotation of the shaft rotates the inner grinding member relative to the outer grinding member to grind coffee beans in the grinding gap; a brush assembly having a brush base and at least one brush member thereon.

### SUMMARY OF THE INVENTION

The objective of the present invention is to prevent coffee powder from depositing in a device for grinding coffee beans.

In order to achieve the foregoing objectives, the present invention provides a device for grinding coffee beans, which a housing assembly, a shaft assembly, a fixing member, and a brush assembly. The housing assembly has a housing, a supporting member, and an outer grinding member. The supporting member and the outer grinding member are arranged in the housing. The shaft assembly has a shaft and an inner grinding member. The inner grinding member, including a ferromagnetic material, is arranged on the shaft. The shaft penetrates through the supporting member. There is a grinding gap between the inner grinding member and the outer grinding member. The rotation of the shaft rotates the inner grinding member relative to the outer grinding member to grind coffee beans in the grinding gap. The fixing member fixes the supporting member and the shaft. The brush assembly has a brush base and at least one brush member thereon. The brush base is provided with at least one magnet. When the brush base is fixed to the bottom of the inner grinding member through the at least one magnet, the rotation of the shaft assembly rotates the brush base to brush away coffee powder remaining in the grinding gap.

Another objective of the present invention is to improve the stability of the device for grinding coffee beans.

In some embodiments, the device for grinding coffee beans further includes a fastening bracket and a fastener. The fastening bracket is provided with a fastening slot and installed on a grinding base. An end of the fastener is arranged on the outer side of the housing. Another end of the fastener, matching the fastening slot, is assembled in the fastening slot.

In some embodiment, the first end of the fastening slot is arranged in the middle area of the fastening bracket, the second end of the fastening slot extends to the edge of the fastening bracket, and the fastener is inserted into the fastening slot from the second end and fixed to the first end.

Below, embodiments are described in detail in cooperation with the attached drawings to make easily understood the characteristics and accomplishments of the present invention.

### BRIEF DESCRIPTION OF THE DRAWINGS

- Fig.1: is a perspective view of a device for grinding coffee beans according to some embodiments;
- Fig.2: is a cross-sectional view taken along A-A' Line of Fig.1;
- Fig.3: is a diagram schematically showing the installation of a brush assembly and a shaft according to some embodiments;
- Figs.4 and 5: are respectively a perspective view and an exploded view of a brush assembly according to some embodiments;
- Figs.6 and 7: are respectively a perspective view and an exploded view of a device for grinding coffee beans assembled on a grinding base according to some embodiments; and
- Fig.8: is a perspective view of a device for grinding coffee beans according to some embodiments.

### DETAILED DESCRIPTION OF THE INVENTION

The present invention will be described in detail with embodiments and attached drawings below. Similar or identical elements are denoted with similar or identical symbols in the drawings. In the drawings, the shapes or thicknesses may be exaggerated intentionally to make presentation simpler and labeling easier. The elements that are well known by the persons skilled in the art are not necessarily described in the specification or depicted in the drawings.

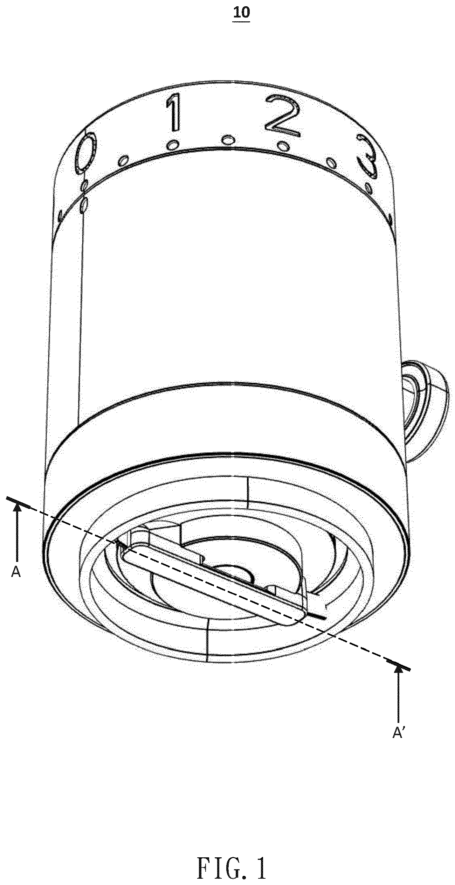

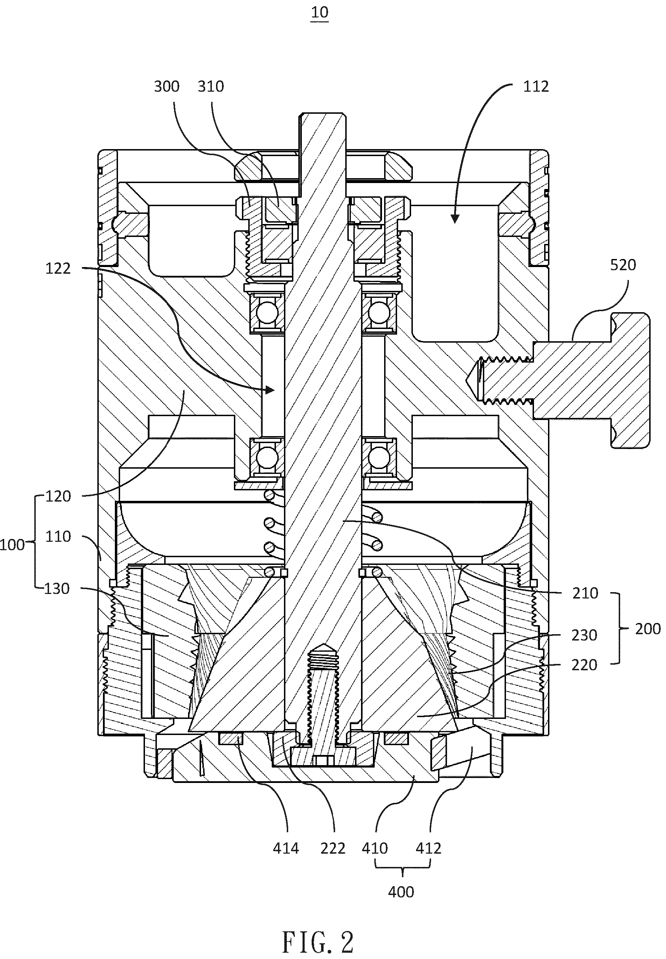

Please refer to Fig.1 and Fig.2. Fig.1 is a perspective view of a device for grinding coffee beans according to some embodiments. Fig.2 is a cross-sectional view taken along A-A' Line of Fig.1. The device 10 for grinding coffee beans of the present invention includes a housing assembly 100, a shaft assembly 200, a fixing member 300, and a brush assembly 400. The housing assembly 100 has a housing 110, a supporting member 120, and an outer grinding member 130. The housing 110 is roughly cylindrical. The exterior of the housing 110 may be marked with a plurality of numerical symbols indicating the size of the grinding gap. The supporting member 120 and the outer grinding member 130 are arranged in the housing 110. Certainly, the housing 110, the supporting member 120, and the outer grinding member 130 may be integrally formed as a piece or independent to each other. The supporting member 120, supporting other components on the housing 110, is penetrated with a through hole 122. The housing assembly 100 may be arranged on a side of the housing 110 close to its bottom. The housing assembly 100 has a burr portion spirally extending toward the center of the housing 110 for grinding coffee beans. The interior of the housing 110 has accommodation spaces 112 that communicate with the lower side and the upper side of the housing 110. Thus, coffee beans can be poured from the top of the housing 110 and accumulated on the housing assembly 100 to be ground. The shaft assembly 200 has a shaft 210 and an inner grinding member 220. The shaft 210, matching the through hole 122 of the supporting member 120, is roughly cylindrical. One end of the shaft 210 is provided with the inner grinding member 220. Optionally, the inner grinding member 220 may be fixed to the shaft 210 through a grinding fixture 222. Specifically, the grinding fixture can sleeve the bottom of the shaft 210, thereby fixing the shaft 210 and supporting the inner grinding member 220. Then, a screw is screwed into the inner thread of the bottom of the shaft 210 through the grinding fixture 222, thereby fixing the shaft 210, the inner grinding member 220, and the grinding fixture 222. Certainly, the shaft 210 and the inner grinding member 220 may be integrally formed as a piece or independent to each other. The inner grinding member 220 has a burr portion spirally extending toward the center of the housing 110 for grinding coffee beans. After the shaft 210 moves from bottom to top to pass through the supporting assembly 120 via the through hole 122, the top of the inner grinding member 220 is pressed against the bottom of the supporting assembly 120. At this time, the shaft 210 cannot continue moving upward and the inner grinding member 220 and the outer grinding member 130 are approximately at the same horizontal height. There is a grinding gap 230 between the inner grinding member 220 and the outer grinding member 130. The rotation of the shaft 210 rotates the inner grinding member 220 relative to the outer grinding member 130 to grind coffee beans accumulated in the grinding gap into coffee powder. The fixing member 300 fixes the supporting member 120 and the shaft 210, such that the relative distance between the inner grinding member 220 and the outer grinding member 130 on the horizontal plane does not change due to the rotation of the inner grinding member 220. For example, the fixing member 300 can be secured to a groove at one end of the supporting member 120 through a threaded structure. The threaded structure provides upward support for the fixing member 300. Next, the shaft 210, which penetrates through the supporting member 120, is secured using a nut 310 to prevent the shaft 210 from sliding downward. By adjusting the grinding gap 230, the particle size of the coffee powder can be controlled. Specifically, rotating the fixing member 300 can adjust the relative horizontal height between the fixing member 300 and the groove. The upward movement of the fixing member 300 causes the corresponding upward displacement of the shaft 210. As a result, the inner grinding member 220, which is located at one end of the shaft 210, also moves upward. Due to the different grinding gaps 230 between the inner grinding member 220 and the outer grinding member 130 at different horizontal heights, the longitudinal movement of the inner grinding member 220 can be used to adjust the particle size of the coffee powder.

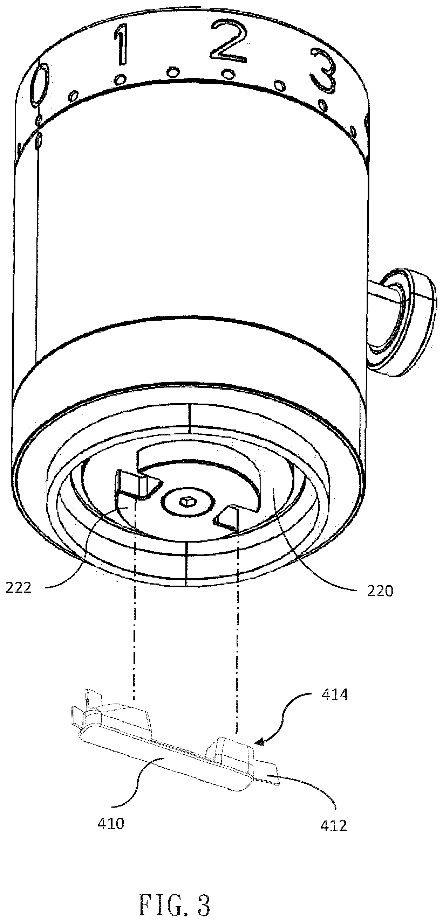

As shown in Figs.2-4, the inner grinding member 220 of the present invention includes ferromagnetic materials such as iron, cobalt, nickel, their compounds, or alloys like stainless steel. The brush assembly 400 has a brush base 410 and at least one brush member 412. The brush base 410 is provided with one or more magnets 414 that can absorb the inner grinding member 220. This allows the brush assembly 400 to be magnetically attached and secured to the inner grinding member 220. One end of the brush element 412 is arranged on the brush base 410 and another end of the brush element 412 extends to the grinding gap or the peripheral brushes. When the brush base 410 is fixed to the inner grinding member 220, the rotation of the shaft assembly 200 can rotate the brush base 410, thereby rotating the brush member 412 and brushing away coffee powder remaining in or around the grinding gap 230.

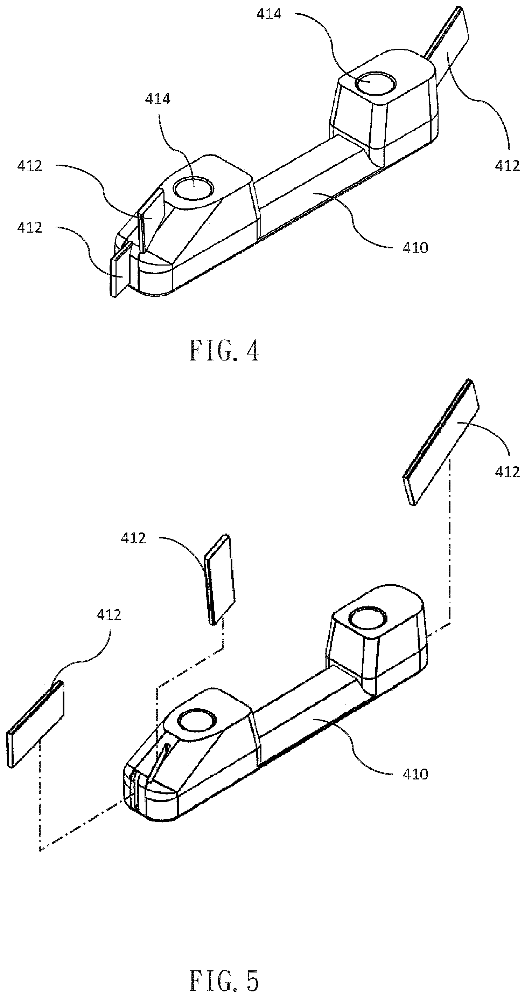

Please refer to Fig.4 and Fig.5. Figs.4 and 5 are respectively a perspective view and an exploded view of a brush assembly according to some embodiments. According to practical requirements, at least two brush members 412 can be used. These brush members 412 can be different in location, extending direction, length, bristle thickness, and bristle hardness. Preferably, the brush members 412 have different lengths for brushing away coffee powder remaining in different depths of the grinding gap 230. Preferably, these brush members 412 may have inclination angles relative to a horizontal plane for brushing away coffee powder of different horizontal heights remaining in the grinding gap 230. Preferably, the brush members 412 have different bristle thicknesses for brushing away coffee powder with different sizes remaining in the grinding gap. 230.

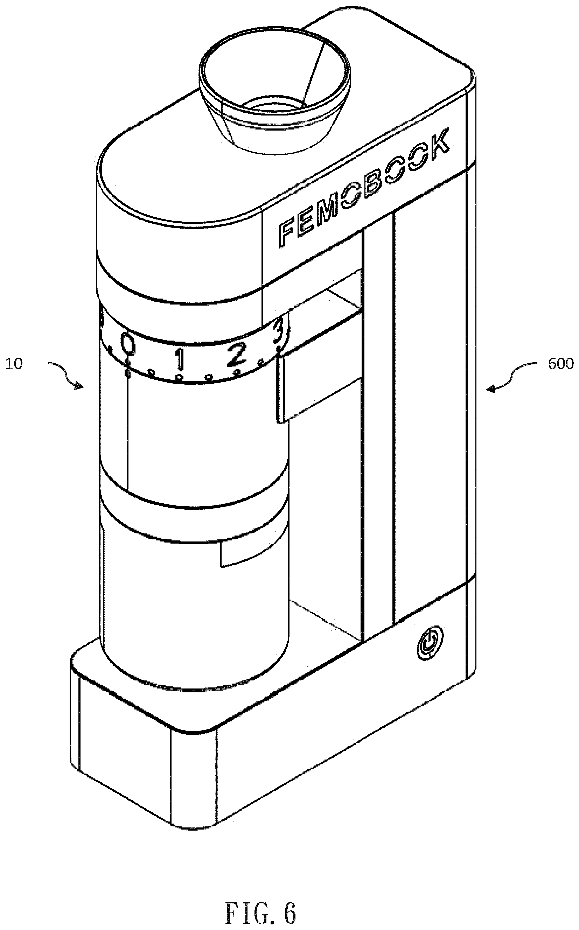

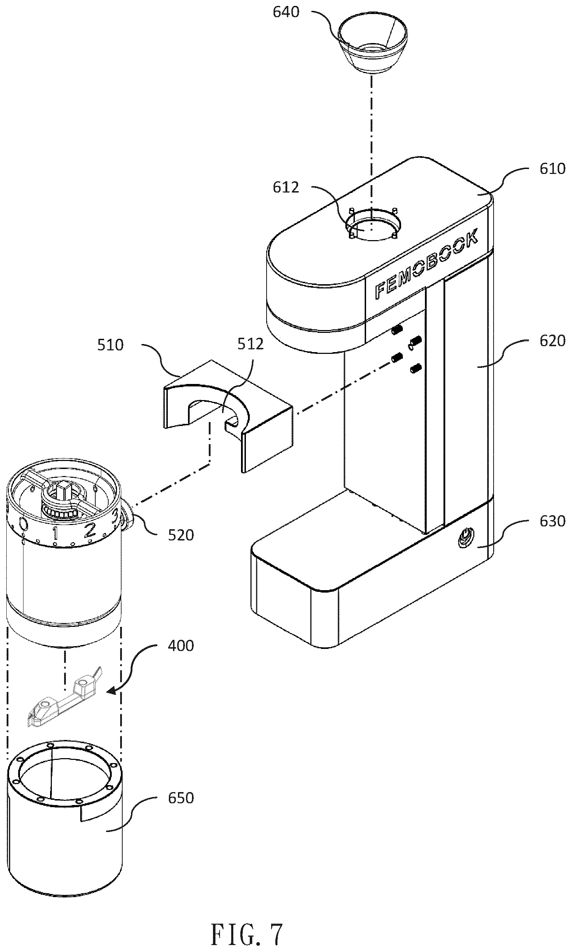

Please refer to Fig.6 and Fig.7. Figs.6 and 7 are respectively a perspective view and an exploded view of a device for grinding coffee beans assembled on a grinding base according to some embodiments. The device 10 for grinding coffee beans is an independent device that can be either disassembled from or assembled on any grinding base 600. The device 10 for grinding coffee beans can also be combined with any component such as a handle. Overall, the grinding base 600 includes an upper casing 610, a support body 620, and a lower casing 630. The upper casing 610 is roughly rectangular and provided with a feed opening 612 that connects with the upper and lower sides of the upper casing 610. The feed opening 612 on the top surface of the upper casing 610 can be either assembled with or disassembled from a feeding member 640 using magnetic, threaded, or fastening structures, etc. The feeding member 640 may be roughly funnel-shaped for users to place coffee beans. The interior of the upper casing 610 can be equipped with transmission structures such as gears and belts (not shown) that provide rotational mechanical force for the device 10 for grinding coffee beans. The two ends of the support body 620 are respectively connected to the upper casing 610 and the lower casing 630 to guarantee the overall balance of the grinding base 600. The interior of the support body 620 can be equipped with a direct-current (DC) motor or an alternating-current (AC) motor (not shown) that provides mechanical force to the transmission structures. The lower casing 630 is roughly rectangular. The interior of the lower casing 630 can be equipped with a power supply device including battery units, power management circuits, and transformers (not shown). The power supply device supplies power to the DC motor or AC motor through wires within the lower casing 630, the support body 620, and the upper casing 610.

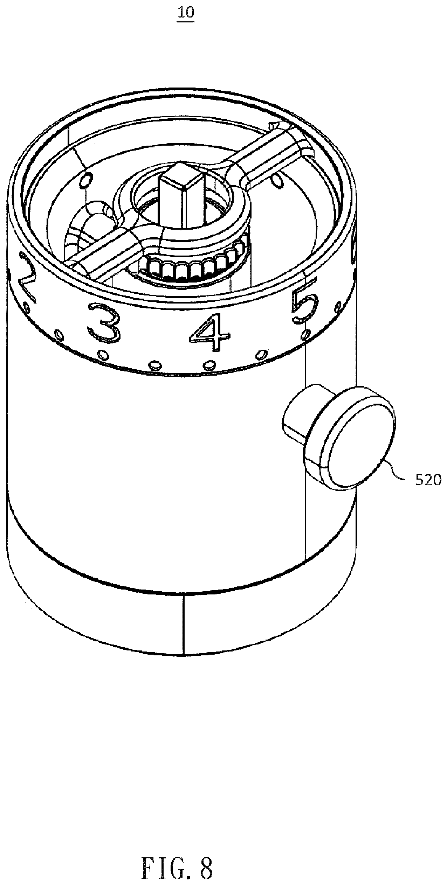

Please refer to Fig.7 and Fig.8. Fig.8 is a perspective view of a device for grinding coffee beans according to some embodiments. The device 10 for grinding coffee beans may also include a fastening bracket 510 and a fastener 520. The fastening bracket 510 is provided with a fastening slot 512. The fastening bracket 510 is installed on the grinding base 600. For example, the fastening bracket 510 can be assembled on the support body 620 of the grinding base 600 using a threaded structure. One end of the fastener 520 is arranged on the outer side of the housing 110, using, but not limited to, the threaded structure in Fig.2. Another end of the fastener 520 matches the fastening slot 512, especially shape and size, so that the fastener 520 can be either assembled with or embedded into the fastening slot 512. Preferably, the first end of the fastening slot 512 is located in the middle area of the fastening bracket 510 and the second end of the fastening slot 512 extends to the edge of the fastening bracket 510. This way, the user can grip the device 10 for grinding coffee beans and upwardly insert the fastener 520 into the fastening slot 512 from the second end. Finally, the user clockwise rotates the device 10 for grinding coffee bean to fix the fastener 520 to the first end. In the conventional device for grinding coffee bean, multiple pins on the upper side of the housing are fixed to the bottom of the upper casing of the grinding base. Due to the limited contact area of the pin, the device for grinding coffee beans easily detaches from the grinding base during the grinding process. In comparison to the conventional technology, one end of the fastener 520 fixed to the fastening slot 512 has a larger contact area (e.g., a circumferential length equivalent to a diameter of 2 to 4 cm). Therefore, the device 10 for grinding coffee beans has good stability. Preferably, anti-slip textures can be formed on the fastener 520 or the fastening slot 512 to further ensure the stability of the device 10 for grinding coffee beans. Furthermore, the bottom of the device 10 for grinding coffee beans can also be equipped with a discharging member 650 for carrying the coffee powder.

The device 10 for grinding coffee beans of the present invention can be either electric or manual. In some embodiments, the shaft 210 is connected with an electric mechanism (not shown) inside the upper casing 610 of the grinding base 600. When the shaft 210 is driven by the electric mechanism to rotate, the shaft 210 will rotate the inner grinding member 220 and the brush base 410, thereby simultaneously finishing grinding coffee beans and cleaning the grinding gap. In some embodiments, the shaft 210 is connected with a manual mechanism such as a handle (not shown), which operates in a similar manner to the electric mechanism. Thus, the operation of the manual mechanism will not be reiterated.

The embodiments described above are only to exemplify the present invention but not to limit the scope of the present invention.

## Claims

1. A device (10) for grinding coffee beans comprising:
a housing assembly (100) having a housing (110), a supporting member (120), and an outer grinding member (130), wherein the supporting member (120) and the outer grinding member (130) are arranged in the housing (110);
a shaft assembly (200) having a shaft (210) and an inner grinding member (220), wherein the inner grinding member (220), comprising a ferromagnetic material, is arranged on the shaft (210), the shaft (210) penetrates through the supporting member (120), there is a grinding gap (230) between the inner grinding member (220) and the outer grinding member (130), rotation of the shaft (210) rotates the inner grinding member (220) relative to the outer grinding member (130) to grind coffee beans in the grinding gap (230);
a fixing member (300) fixing the supporting member (120) and the shaft (210); and
a brush assembly (400) having a brush base (410) and at least one brush member (414) thereon, and the brush base (410) is provided with at least one magnet (414), wherein when the brush base (410) is fixed to a bottom of the inner grinding member (220) through the at least one magnet (414), rotation of the shaft assembly (200) rotates the brush base (410) to brush away coffee powder remaining in the grinding gap (230).

2. The device (10) for grinding coffee beans according to claim 1, wherein the at least one brush member (414) comprises a plurality of brush members (414).

3. The device (10) for grinding coffee beans according to claim 2, wherein the plurality of brush members (414) have different lengths for brushing away coffee powder remaining in different depths of the grinding gap (230).

4. The device (10) for grinding coffee beans according to claim 2, wherein the plurality of brush members (414) have inclination angles relative to a horizontal plane for brushing away coffee powder of different horizontal heights remaining in the grinding gap (230).

5. The device (10) for grinding coffee beans according to claim 2, wherein bristles of the plurality of brush members (414) have different bristle thicknesses for brushing away coffee powder with different sizes remaining in the grinding gap (230).

6. The device (10) for grinding coffee beans according to claim 1, further comprising:
a fastening bracket (510) provided with a fastening slot (512) and installed on a grinding base; and
a fastener (520) with an end thereof arranged on an outer side of the housing (110), and another end of the fastener, matching the fastening slot (512), is assembled in the fastening slot (512).

7. The device (10) for grinding coffee beans according to claim 6, wherein a first end of the fastening slot (512) is arranged in a middle area of the fastening bracket (510), a second end of the fastening slot (512) extends to an edge of the fastening bracket (510), and the fastener (520)is inserted into the fastening slot (512) from the second end and fixed to the first end.

8. The device (10) for grinding coffee beans according to claim 1, wherein the shaft (210) is connected with an electric mechanism and driven to rotate by the electric mechanism, thereby rotating the inner grinding member (220) and the brush base (410).

9. The device (10) for grinding coffee beans according to claim 1, wherein the shaft (210) is connected with a manual mechanism and driven to rotate by the manual mechanism, thereby rotating the inner grinding member (220) and the brush base (410).

## Patentansprüche

1. Vorrichtung (10) zum Mahlen von Kaffeebohnen, welche umfasst:
eine Gehäusebaugruppe (100), die ein Gehäuse (110), ein Stützelement (120) und ein äußeres Mahlelement (130) aufweist, wobei das Stützelement (120) und das äußere Mahlelement (130) in dem Gehäuse (110) angeordnet sind;
eine Wellenbaugruppe (200), die eine Welle (210) und ein inneres Mahlelement (220) aufweist, wobei das innere Mahlelement (220), das ein ferromagnetisches Material umfasst, an der Welle (210) angeordnet ist, wobei die Welle (210) das Stützelement (120) durchdringt, wobei es einen Mahlspalt (230) zwischen dem inneren Mahlelement (220) und dem äußeren Mahlelement (130) gibt, wobei eine Drehung der Welle (210) das innere Mahlelement (220) relativ zu dem äußeren Mahlelement (130) dreht, um Kaffeebohnen in dem Mahlspalt (230) zu mahlen;
ein Befestigungselement (300), welches das Stützelement (120) und die Welle (210) fixiert; und
eine Bürstenbaugruppe (400), die eine Bürstenbasis (410) und mindestens ein Bürstenelement (414) daran aufweist, und die Bürstenbasis (410) ist mit mindestens einem Magneten (414) versehen, wobei, wenn die Bürstenbasis (410) durch den mindestens einen Magneten (414) an einer Unterseite des inneren Mahlelements (220) befestigt ist, eine Drehung der Wellenbaugruppe (200) die Bürstenbasis (410) dreht, um in dem Mahlspalt (230) verbliebenes Kaffeepulver wegzubürsten.

2. Vorrichtung (10) zum Mahlen von Kaffeebohnen nach Anspruch 1, bei welcher das mindestens eine Bürstenelement (414) eine Vielzahl von Bürstenelementen (414) umfasst.

3. Vorrichtung (10) zum Mahlen von Kaffeebohnen nach Anspruch 2, bei welcher die Vielzahl von Bürstenelementen (414) unterschiedliche Längen aufweist, um in unterschiedlichen Tiefen des Mahlspalts (230) verbliebenes Kaffeepulver wegzubürsten.

4. Vorrichtung (10) zum Mahlen von Kaffeebohnen nach Anspruch 2, bei welcher die Vielzahl von Bürstenelementen (414) Neigungswinkel relativ zu einer horizontalen Ebene aufweist, um Kaffeepulver wegzubürsten, das in unterschiedlichen horizontalen Höhen in dem Mahlspalt (230) verblieben ist.

5. Vorrichtung (10) zum Mahlen von Kaffeebohnen nach Anspruch 2, bei welcher Borsten der Vielzahl von Bürstenelementen (414) unterschiedliche Borstendicken aufweisen, um Kaffeepulver mit verschiedenen Größen, das im Mahlspalt (230) verblieben ist, wegzubürsten.

6. Vorrichtung (10) zum Mahlen von Kaffeebohnen nach Anspruch 1, welche ferner umfasst:
eine Befestigungshalterung (510), die mit einem Befestigungsschlitz (512) versehen ist und an einer Mahlbasis angebracht ist; und
einen Befestiger (520), wobei ein Ende davon an einer Außenseite des Gehäuses (110) angeordnet ist, und ein anderes Ende des Befestigers, das mit dem Befestigungsschlitz (512) übereinstimmt, ist in dem Befestigungsschlitz (512) montiert.

7. Vorrichtung (10) zum Mahlen von Kaffeebohnen nach Anspruch 6, bei welcher ein erstes Ende des Befestigungsschlitzes (512) in einem mittleren Bereich der Befestigungshalterung (510) angeordnet ist, wobei sich ein zweites Ende des Befestigungsschlitzes (512) zu einer Kante der Befestigungshalterung (510) erstreckt, und der Befestiger (520) ist von dem zweiten Ende in den Befestigungsschlitz (512) eingeführt und an dem ersten Ende befestigt.

8. Vorrichtung (10) zum Mahlen von Kaffeebohnen nach Anspruch 1, bei welcher die Welle (210) mit einem elektrischen Mechanismus verbunden ist und durch den elektrischen Mechanismus zur Drehung angetrieben wird, wodurch das innere Mahlelement (220) und die Bürstenbasis (410) gedreht werden.

9. Vorrichtung (10) zum Mahlen von Kaffeebohnen nach Anspruch 1, bei welcher die Welle (210) mit einem manuellen Mechanismus verbunden ist und durch den manuellen Mechanismus zur Drehung angetrieben wird, wodurch das innere Mahlelement (220) und die Bürstenbasis (410) gedreht werden.

## Revendications

1. Dispositif (10) pour moudre des grains de café comprenant :
un ensemble boîtier (100) présentant un boîtier (110), un élément de support (120) et un élément de mouture extérieur (130), dans lequel l'élément de support (120) et l'élément de mouture extérieur (130) sont disposés dans le boîtier (110) ;
un ensemble arbre (200) présentant un arbre (210) et un élément de mouture intérieur (220), dans lequel l'élément de mouture intérieur (220), comprenant un matériau ferromagnétique, est disposé sur l'arbre (210), l'arbre (210) traverse l'élément de support (120), il existe un espace de mouture (230) entre l'élément de mouture intérieur (220) et l'élément de mouture extérieur (130), la rotation de l'arbre (210) fait tourner l'élément de mouture intérieur (220) par rapport à l'élément de mouture extérieur (130) pour moudre les grains de café dans l'espace de mouture (230) ;
un élément de fixation (300) fixant l'élément de support (120) et l'arbre (210) ; et
un ensemble brosse (400) présentant une base de brosse (410) et au moins un élément brosse (414) sur celle-ci, et la base de brosse (410) est munie d'au moins un aimant (414), dans lequel, lorsque la base de brosse (410) est fixée au fond de l'élément de mouture intérieur (220) par l'intermédiaire de l'au moins un aimant (414), la rotation de l'ensemble arbre (200) fait tourner la base de brosse (410) pour brosser la poudre de café restante dans l'espace de mouture (230).

2. Dispositif (10) pour moudre des grains de café selon la revendication 1, dans lequel l'au moins un élément brosse (414) comprend une pluralité d'éléments brosses (414).

3. Dispositif (10) pour moudre des grains de café selon la revendication 2, dans lequel la pluralité d'éléments brosses (414) présentent des longueurs différentes pour brosser la poudre de café restante à différentes profondeurs de l'espace de mouture (230).

4. Dispositif (10) pour moudre des grains de café selon la revendication 2, dans lequel la pluralité d'éléments brosses (414) présentent des angles d'inclinaison par rapport à un plan horizontal pour brosser la poudre de café de différentes hauteurs horizontales restante dans l'espace de mouture (230).

5. Dispositif (10) pour moudre des grains de café selon la revendication 2, dans lequel les poils de la pluralité d'éléments brosses (414) présentent des épaisseurs de poils différentes pour brosser la poudre de café de différentes tailles restante dans l'espace de mouture (230).

6. Dispositif (10) pour moudre des grains de café selon la revendication 1, comprenant en outre :
un socle de fixation (510) muni d'une fente de fixation (512) et installé sur une base de mouture ; et
une fixation (520) dont une extrémité est disposée sur un côté extérieur du boîtier (110), et une autre extrémité de la fixation, correspondant à la fente de fixation (512), est assemblée dans la fente de fixation (512).

7. Dispositif (10) pour moudre des grains de café selon la revendication 6, dans lequel une première extrémité de la fente de fixation (512) est disposée dans une zone intermédiaire du socle de fixation (510), une seconde extrémité de la fente de fixation (512) s'étend jusqu'à un bord du socle de fixation (510), et la fixation (520) est insérée dans la fente de fixation (512) à partir de la seconde extrémité et fixée à la première extrémité.

8. Dispositif (10) pour moudre des grains de café selon la revendication 1, dans lequel l'arbre (210) est relié à un mécanisme électrique et entraîné pour tourner par le mécanisme électrique, faisant ainsi tourner l'élément de mouture intérieur (220) et la base de brosse (410).

9. Dispositif (10) pour moudre des grains de café selon la revendication 1, dans lequel l'arbre (210) est relié à un mécanisme manuel et entraîné pour tourner par le mécanisme manuel, faisant ainsi tourner l'élément de mouture intérieur (220) et la base de brosse (410).
